# EUROPÄISCHE PATENTSCHRIFT

(11) **EP 2 385 908 B1**
(45) Veröffentlichungstag und Bekanntmachung des Hinweises auf die Patenterteilung: **29.10.2014**
(21) Anmeldenummer: 09795425.9
(22) Anmeldetag: 18.12.2009
(51) Int. Cl.: B60L 11/18, H02J 7/14, B60R 16/03

(54) **VERFAHREN ZUM BETREIBEN EINES BORDNETZES MIT MINDESTENS ZWEI BORDTEILNETZEN**
METHOD FOR MANAGING AN ELECTRICAL CIRCUIT WITH AT LEAST TWO SUBSECTIONS
PROCÉDÉ DE CONTRÔLE D'UN CIRCUIT ÉLECTRIQUE COMPORTANT AU MOINS DEUX CIRCUITS PARTIELS

(30) Priorität: 07.01.2009 DE 102009000051
(43) Veröffentlichungstag der Anmeldung: 16.11.2011
(73) Patentinhaber: Robert Bosch GmbH, 70442 Stuttgart (DE)
(72) Erfinder: LEHNER, Michael, 75446 Wiernsheim (DE); HEIDRICH, Torsten, 71665 Vaihingen/Enz (DE)
(86) Internationale Anmeldenummer: PCT/EP2009/067482
(87) Internationale Veröffentlichungsnummer: WO 2010/079080

(56) Entgegenhaltungen:
- EP-A2- 1 628 379
- JP-A- 2005 022 561
- JP-A- 2008 168 754
- US-B1- 6 578 649

## Beschreibung

Die Erfindung betrifft ein Verfahren zum Betreiben eines Bordnetzes eines Kraftfahrzeugs, wobei das Bordnetz mindestens zwei Bordteilnetze unterschiedlicher elektrischer Spannungen aufweist und eine einen elektrischen Energiefluss zulassende Kopplung zwischen den Bordteilnetzen besteht, und wobei das eine Bordteilnetz an einen Generator und/oder mindestens einen elektrischen Verbraucher und das andere Bordteilnetz an mindestens einen elektrischen Verbraucher angeschlossen ist.

### Stand der Technik

Es ist bekannt, in Kraftfahrzeugen Bordnetze mit mehreren Bordteilnetzen zu betreiben. Dies ist insbesondere bei Hybridfahrzeugen der Fall, die ein Bordteilnetz für einen elektrischen Antrieb und ein Bordteilnetz für elektrische Fahrzeugkomponenten aufweisen, die mit anderer Spannung als der elektrische Antrieb betrieben werden. In dem Hybridfahrzeug ist es möglich eine elektrische Maschine entweder motorisch für den Antrieb des Kraftfahrzeugs oder generatorisch zu betreiben, wodurch ermöglicht wird, mittels einer Brennkraftmaschine eine Batterie zu laden oder bei einem Bremsen des Kraftfahrzeugs Energie in die Batterie zurückzuführen. Für den Betrieb des elektrischen Antriebs ist eine hohe Spannung von cirka 300 V notwendig, die von einer Hochvoltbatterie bereitgestellt wird. Die Bordteilnetze werden über einen Gleichspannungswandler miteinander verkoppelt, sodass die Spannung des einen Bordteilnetzes gewandelt wird und ein anderes Bordteilnetz versorgen kann.

In einem Fehlerfall innerhalb eines Bordteilnetzes wird zum Schutz von Personen das Bordteilnetz für den Antrieb mit einer für Personen gefährlich hohen Spannung abgeschaltet, indem die zugehörige Batterie vom Bordteilnetz getrennt wird. Durch das Trennen der Batterie vom Bordteilnetz kann das andere Bordteilnetz nicht mehr mit elektrischer Energie versorgt werden, weshalb deren Verbraucher nicht weiter betrieben werden können. Durch dieses Vorgehen wird das gesamte Kraftfahrzeug im Fehlerfall abgeschaltet.

Aus der Offenlegungsschrift JP 2005-022561 A ist außerdem ein Verfahren zum Betreiben eines Bordnetzes eines Hybridfahrzeugs bekannt, bei welchem das Bordnetz einen Hochvoltteil und einen Niedervoltteil aufweist, die über einen Gleichspannungswandler miteinander in Verbindung stehen. Wird erkannt, dass der Gleichspannungswandler fehlerhaft arbeitet, wird durch Betätigen eines Schalters der Gleichspannungswandler umgangen.

Es wird eine Möglichkeit benötigt, die ein sicheres Betreiben des Kraftfahrzeugs auch während eines Fehlerfalls in dem Bordnetz ermöglicht.

### Offenbarung der Erfindung

Erfindungsgemäß ist vorgesehen, dass in einem Fehlerfall die von dem Generator gelieferte Spannung bis auf einen für Personen ungefährlichen Wert abgesenkt wird, wobei dennoch ein Energiefluss von dem den Generator aufweisenden Bordteilnetz in das andere, den Verbraucher aufweisende Bordteilnetz erfolgt. Vorteil hierbei ist, dass auch innerhalb des Fehlerfalls nicht das gesamte Bordnetz abgeschaltet wird, sondern derart betrieben wird, dass der Betrieb für Personen ungefährlich ist und gleichzeitig ein Betrieb des Kraftfahrzeugs gesichert ist. Dies wird erreicht, indem der elektrische Verbraucher weiterhin mit elektrischer Energie versorgt wird. Es ist insbesondere vorgesehen, dass die Bordteilnetze jeweils eine Gleichspannung führen und die Kopplung zwischen den Bordteilnetzen über einen Gleichspannungswandler erfolgt. Bei Verringerung der vom Generator gelieferten Spannung ist vorzugsweise vorgesehen, dass auch der Gleichspannungswandler derart angepasst wird, dass in dem Bordteilnetz, welches nicht an den Generator angeschlossen ist, insgesamt kaum oder keine Spannungsänderung auftritt. Das Absenken der vom Generator gelieferten Spannung setzt voraus, dass es sich bei dem Generator um einen spannungsregelbaren Generator handelt. Es kann lediglich an einem der Bordteilnetze mindestens ein elektrischer Verbraucher vorgesehen sein. Es ist jedoch auch möglich, sowohl das eine als auch das andere Bordteilnetz mit mindestens einem elektrischen Verbraucher zu verbinden.

Erfindungsgemäß ist vorgesehen, dass eines der Bordteilnetze als Hochvoltbordteilnetz und das andere Bordteilnetz als Niedervoltbordteilnetz verwendet wird. Durch diese Ausbildung ist es möglich, das Erfindungsgemäße Verfahren in einem Hybridfahrzeug einzusetzen, welche typischerweise ein Hochvoltbordteilnetz für das Betreiben eines elektrischen Antriebsmotors benötigt und das Niedervoltbordteilnetz weitere kraftfahrzeugtypische, elektrische Verbraucher versorgt. Unter elektrischen Verbrauchern sind insbesondere Steuergeräte für eine Steuerung von Antriebsaggregaten und Sicherheitssystemen vorgesehen.

Nach einer Weiterbildung der Erfindung ist vorgesehen, dass der Generator das Hochvoltbordteilnetz direkt mit elektrischer Spannung versorgt. Durch die direkte Versorgung des Hochvoltbordteilnetzes mittels des Generators kann ein Generator eingesetzt werden, welcher als Hochvoltgenerator ausgebildet ist. Dies führt zu einer sehr guten Energieumwandlung und ermöglicht auf einfache Weise sowohl das Hochvoltbordteilnetz als auch das Niedervoltbordteilnetz mit elektrischer Energie zu versorgen.

Nach einer Weiterbildung der Erfindung ist vorgesehen, dass mindestens eines der Bordteilnetze, insbesondere das Niedervoltbordteilnetz, elektrische Energie in mindestens einer ihm zugeordneten Batterie speichert. Durch das Speichern der Energie wird ermöglicht, eine stetige, gleichbleibende Gleichspannung innerhalb der jeweiligen Bordteilnetze zu erzeugen. Es ist vorzugsweise vorgesehen, dass im Hochvoltbordteilnetz eine Hochvoltbatterie und im Niedervoltbordteilnetz eine Niedervoltbatterie verwendet wird.

Erfindungsgemäß ist vorgesehen, dass bei einer beschädigten Leitungsisolation, einer geöffneten Isolationsabdeckung und/oder mindestens einer durchtrennten elektrischen Verbindung innerhalb des Hochvoltbordteilnetzes der Fehlerfall vorliegt. Diese vorteilhafte Ausbildung des Verfahrens ermöglicht es, insbesondere bereits bekannte Detektionsmittel für eine Detektion des Fehlerfalls einzusetzen. So kann zur Detektion einer beschädigten Leitungsisolation eine

Isolationsüberwachung, zur Detektion einer geöffneten Isolationsabdeckung eine Deckel-Offen-Erkennung, und zur Erkennung einer durchtrennten elektrischen Verbindung eine Überwachung einer Pilot-Linie innerhalb der elektrischen Verbindung verwendet werden. Die beschädigte Leitungsisolation, die geöffnete Isolationsabdeckung und die durchtrennte Verbindung bilden den Fehlerfall dadurch, dass sie einen Zugriff einer Person an spannungführende Leitungen ermöglichen und somit Gefahrenquellen für Personen sind.

Erfindungsgemäß ist vorgesehen, dass der Fehlerfall von mindestens eine Auswerteeinrichtung detektiert und daraufhin die vom Generator gelieferte Spannung abgesenkt wird. Unter der Auswerteeinrichtung wird insbesondere ein Steuergerät verstanden, welches mit entsprechenden Mitteln zur Detektion des Fehlerfalls zusammenwirkt und die Generatorspannung beeinflussen kann.

Nach einer Weiterbildung der Erfindung ist vorgesehen, dass die vom Generator gelieferte Spannung abgesenkt wird, wenn die Auswerteeinrichtung eine Betriebsstörung aufweist. Für den Fall, dass die Auswerteeinrichtung selbst eine Störung - eine Betriebsstörung - aufweist, wird aus Sicherheitsgründen der Fehlerfall sofort und vorbeugend angenommen.

Nach einer Weiterbildung der Erfindung ist vorgesehen, dass als Verbraucher ein nur für einen sicheren Betrieb des Kraftfahrzeugs notwendiger Verbraucher verwendet wird. Unter notwendigen Verbrauchern werden insbesondere Steuergeräte für Antriebsaggregate, Bremssysteme und sonstige Sicherheitssysteme verstanden. Durch die selektive Verwendung bestimmter, notwendiger Verbraucher wird ermöglicht, innerhalb des Kraftfahrzeugs den Verbrauch elektrischer Energie zu minimieren. Dadurch kann die Spannung des Generators besonders weit abgesenkt werden und gleichzeitig eine hohe Sicherheit für Personen und ein Betrieb des Kraftfahrzeugs herbeigeführt werden.

Nach einer Weiterbildung der Erfindung ist vorgesehen, dass das Hochvoltbordteilnetz im Normalbetrieb mit einer Spannung von ungefähr 300 V betrieben wird.

Nach einer Weiterbildung der Erfindung ist vorgesehen, dass das Niedervoltbordteilnetz mit einer Spannung von ungefähr 14 V betrieben wird.

Nach einer Weiterbildung der Erfindung ist vorgesehen, dass der Generator im Fehlerfall eine Spannung von ungefähr 60 V liefert. Die Spannung von 60 V innerhalb eines der Bordteilnetze minimiert aufgrund niedriger Ströme innerhalb der Bordteilnetze ein Sicherheitsrisiko für Personen. Diese Spannung erlaubt jedoch durch Wandlung ausreichend Energie für ein Bordteilnetz geringer Spannung, vorzugsweise mit 14 V, zu erzeugen.

Nach einer Weiterbildung der Erfindung ist vorgesehen, dass als Kraftfahrzeug ein Hybridfahrzeug verwendet wird. Die Verwendung von mehreren Bordteilnetzen in Hybridfahrzeugen wird häufig vorgenommen, weshalb sich das erfindungsgemäße Verfahren für die Anwendung in Hybridfahrzeugen besonders eignet.

Die Zeichnungen veranschaulichen die Erfindung anhand eines Ausführungsbeispiels, und zwar zeigt:
- Figur 1: eine schematische Darstellung eines Bordnetzes eines Kraftfahrzeugs und
- Figur 2: ein Flussdiagramm des erfindungsgemäßen Verfahrens.

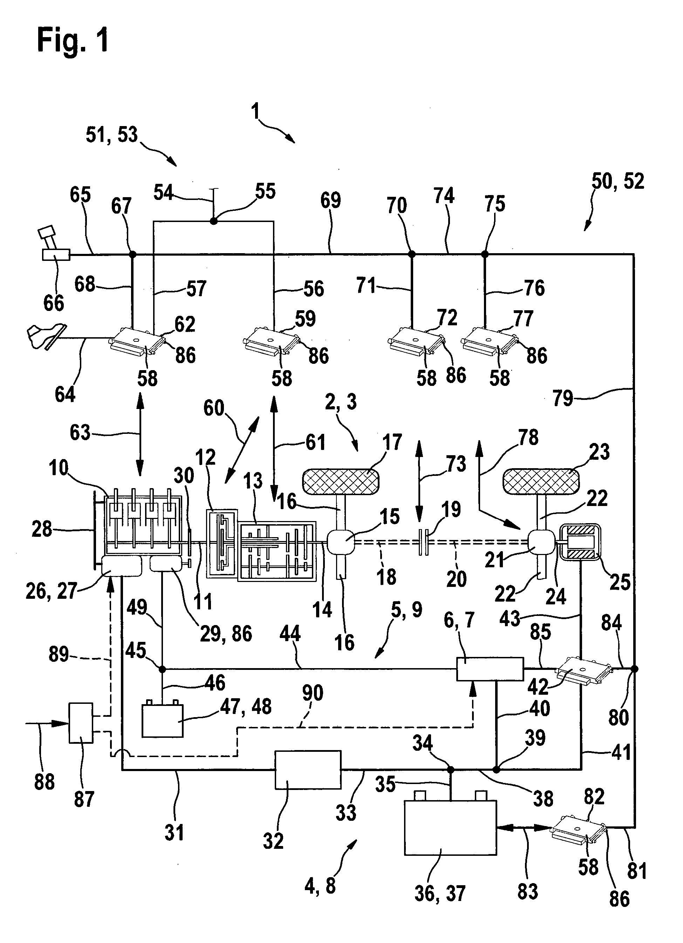

Die Figur 1 zeigt ein Bordnetz 1 eines Kraftfahrzeugs 2 in Form eines Hybridfahrzeugs 3 in schematischer Darstellung. Das Bordnetz 1 weist zwei Bordteilnetze 4 und 5 auf, welche über eine Kopplung 6 in Form eines Gleichspannungswandlers 7 elektrisch miteinander verbunden sind. Das Bordteilnetz 4 ist als Hochvoltbordteilnetz 8 ausgebildet und das Bordteilnetz 5 ist als Niedervoltbordteilnetz 9 ausgebildet. Das Kraftfahrzeug 2 weist eine Brennkraftmaschine 10 auf, welche über eine Welle 11 mit einer Kupplung 12 verbunden ist. Die Kupplung 12 führt zu einem Getriebe 13. Vom Getriebe 13 führt eine Welle 14 zu einem Differenzialgetriebe 15, welches über Seitenwellen 16 Antriebsräder 17 antreibt. Aus Gründen der Übersichtlichkeit ist nur eines der Antriebsräder 17 in Figur 1 dargestellt. Ausgehend vom Differenzialgetriebe 15 führt eine Welle 18 zu einer Kupplung 19, die auf der von der Welle 18 abgewandten Seite mit einer weiteren Welle 20 verbunden ist. Die Welle 20 führt zu einem weiteren Achsgetriebe 21, das seinerseits über Seitenwellen 22 Antriebsräder 23 antreibt. Auch bei den Antriebsrädern 23 ist aus Gründen der Übersichtlichkeit nur eines der Antriebsräder 23 dargestellt. Ausgehend vom Differenzialgetriebe 21 verläuft eine weitere Welle 24, die mit einer elektrischen Maschine 25 wirkverbunden ist. An der Brennkraftmaschine 10 ist ein Generator 26 in Form eines Hochvoltgenerators 27 angeordnet. Der Generator 26 ist mit der Brennkraftmaschine 10 über eine Antriebsverbindung 28 wirkverbunden. Weiter ist an der Brennkraftmaschine 10 ein Startermotor 29 angeordnet, welcher mit einem Starterritzel 30, welches mit der Welle 11 drehfest verbunden ist, wirkverbindbar ist. Der Generator 26 versorgt das Bordteilnetz 4 mit einer Wechselspannung über eine Leitung 31. Die Leitung 31 verbindet den Generator 26 mit einem Gleichrichter 32, welcher die Wechselspannung des Generators 26 in eine Gleichspannung umwandelt. Ausgehend vom Gleichrichter 32 verläuft eine Hochvoltleitung 33 des Bordteilnetzes 4 zu einem Knotenpunkt 34. Ausgehend vom Knotenpunkt 34 verläuft eine Hochvoltleitung 35 zu einer Batterie 36 in Form einer Hochvoltbatterie 37 und eine weitere Hochvoltleitung 38 zu einem Knotenpunkt 39. Der Knotenpunkt 39 ist über eine Hochvoltleitung 40 mit der Kopplung 6 elektrisch verbunden. Weiter geht vom Knotenpunkt 39 eine Hochvoltleitung 41 aus, die einen Pulswechselrichter 42 mit einer Spannung von ca. 300 V versorgt. Der Pulswechselrichter 42 ist über eine Hochvoltleitung 43 mit der elektrischen Maschine 25 verbunden und versorgt diese mit einer entsprechenden Versorgungsspannung. Ausgehend von der Kopplung 6 verläuft eine Niedervoltleitung 44 zu einem Knotenpunkt 45. Der Knotenpunkt 45 ist über eine weitere Niedervoltleitung 46 mit einer Batterie 47 in Form einer Niedervoltbatterie 48 verbunden. Weiter ist der Knotenpunkt 45 über eine Niedervoltleitung 49 mit dem Startermotor 29 elektrisch verbindbar. Zur Steuerung der einzelnen Komponenten des Kraftfahrzeugs 2 sind zwei Datennetze 50 und 51 vorgesehen. Bei dem Datennetz 50 handelt es sich um ein H-CAN-Netz 52 und bei dem Datennetz 51 handelt es sich um ein A-CAN-Netz 53. Das Datennetz 51 weist eine erste Datenleitung 54 auf, die sich von einer nicht dargestellen Steuervorrichtung bis zu einem Knotenpunkt 55 erstreckt. Ausgehend von dem Knotenpunkt 55 verlaufen zwei Datenleitungen 56 und 57 zu zwei Steuergeräten 58. Die Datenleitung 56 verbindet den Knotenpunkt 55 mit dem Steuergerät 58 in Form eines kombinierten Getriebe-/Kupplungssteuergeräts 59, welches über Steuerpfade 60 und 61 die Kupplung 12 sowie das Getriebe 13 steuert und/oder regelt. Die Datenleitung 57 des Datennetzes 51 verbindet den Knotenpunkt 55 mit einem kombinierten Motor-/Hybridsteuergerät 62. Das Motor-/Hybridsteuergerät 62 steuert und/oder regelt die Brennkraftmaschine 10 über einen Steuerpfad 63 und erhält zusätzlich Informationen über einen Gaspedalwert mittels einer Datenleitung 64. Das Datennetz 50 weist eine Datenleitung 65 auf, welche einerseits mit einem Ganghebel 66 zur Vorgabe einer Getriebebetriebsart verbunden ist und andererseits mit einem Knotenpunkt 67 verbunden ist. Ausgehend vom Knotenpunkt 67 verläuft eine weitere Datenleitung 68, welche das Motor-/Hybridsteuergerät 62 mit Informationen versorgt. Weiter ist der Knotenpunkt 67 über eine Datenleitung 69 mit einem Knotenpunkt 70 verbunden, welcher eine weitere Datenleitung 71 aufweist, die zu einem Steuergerät 58 in Form eines Kupplungssteuergeräts 72 verbunden ist. Das Kupplungssteuergerät 72 ist über einen Datenpfad 73 mit der Kupplung 19 verbunden und steuert und/oder regelt diese. Ausgehend vom Knotenpunkt 70 verläuft eine weitere Datenleitung 74, welche zu einem Knotenpunkt 75 führt, der seinerseits über eine weitere Datenleitung 76 mit einem Steuergerät 58 in Form eines Achsgetriebesteuergeräts 77 verbunden ist. Das Achsgetriebesteuergerät 77 steuert und/oder regelt über einen Datenpfad 78 das Achsgetriebe 21. Ausgehend vom Knotenpunkt 75 verläuft eine weitere Datenleitung 79 zu einem Knotenpunkt 80 und ausgehend vom Knotenpunkt 80 verläuft eine weitere Datenleitung 81 zu einem Steuergerät 58 in Form eines Batteriemanagementsteuergeräts 82, welches über einen Datenpfad 83 den Betrieb der Batterie 36 steuert und/oder regelt. Ausgehend vom Knotenpunkt 80 verläuft eine weitere Datenleitung 84 zu dem Pulswechselrichter 42 und ausgehend vom Pulswechselrichter 42 verläuft eine zusätzliche Datenleitung 85 zur Kopplung 6. Die Steuergeräte 58 sind zu ihrer elektrischen Versorgung mit dem Bordteilnetz 5, also dem Niedervoltbordteilnetz 9, verbunden. Aus Gründen der Übersichtlichkeit sind die elektrischen Verbindungen zwischen dem Bordteilnetz 5 und den Steuergeräten 58 nicht dargestellt. Durch ihre Verbindung mit dem Bordteilnetz 5 sind die Steuergeräte 58 und der Startermotor 29 als elektrische Verbraucher 86 des Bordteilnetzes 5 ausgebildet. Das Kraftfahrzeug 2 weist zusätzlich eine Auswerteeinrichtung 87 auf, welche über einen Datenpfad 88 Informationen erhält, über die die Auswerteeinrichtung 87 einen Fehlerfall innerhalb des Bordnetzes erkennen kann. Der Datenpfad 88 führt von einer Isolationsüberwachung, zur Detektion einer beschädigten Leitungsisolation, einer Deckel-Offen-Erkennung zur Detektion einer geöffneten Isolationsabdeckung und einer Pilot-Linien-Überwachung zur Erkennung einer durchtrennten elektrischen Verbindung zur Auswerteeinrichtung 87. Mittels einer Datenleitung 89 ist die Auswerteeinheit 87 mit dem Generator 26 verbunden und kann die vom Generator 26 erzeugte Spannung einstellen. Durch eine weitere Datenleitung 90 ist die Auswerteeinrichtung 87 mit der Kopplung 6 verbunden und kann dadurch die Gleichspannungswandlung innerhalb der Kopplung 6 beeinflussen.

In einem Normalbetriebsfall des Bordnetzes 1 versorgt der Generator 26 über den Gleichrichter 32 das Bordteilnetz 4 mit einer Gleichspannung von 300 V. Diese werden in die Batterie 36 gespeist, welche eine konstante Versorgung des Bordteilnetzes 4 gewährleistet. Das Bordnetz 4 versorgt gleichzeitig die Kopplung 6, über die die Gleichspannung des Bordteilnetzes 4 in eine Gleichspannung für das Bordteilnetz 5 gewandelt wird. Die Gleichspannung innerhalb des Bordteilnetzes 5 beträgt etwa 14 V und wird in die Batterie 47 geführt, welche das Bordteilnetz 5 mit einer konstanten Gleichspannung versorgt. Somit ergibt sich, dass der Generator 26 indirekt das Bordteilnetz 5 mit elektrischer Energie versorgt. Während dieses Normalbetriebsfalls können sämtliche elektrischen Verbraucher 86 gemäß ihrer Bestimmung verwendet werden. Weiterhin ist es möglich, die elektrische Maschine 25 motorisch zu betreiben und die Batterien 36 und 47 zu laden.

Im Fehlerfall detektiert die Auswerteeinrichtung 87 anhand der ihr übertragenen Informationen über den Datenpfad 88 das Vorliegen des Fehlerfalls und stellt die Art und Weise des Betriebs des Bordnetzes 1 entsprechend um. Zu diesem Zweck wird der Generator 26 derart geregelt, dass er eine Spannung von etwa 60 V liefert, welche nach dem Gleichrichter 32 eine Gleichspannung von cirka 60 V darstellt. Gleichzeitig wird die Batterie 36 vom Bordteilnetz 4 getrennt, sodass im Bordteilnetz 4 lediglich eine Spannung von 60 V herrscht. Um das Bordteilnetz 5 mit der korrekten Spannung versorgen zu können, wird von der Auswerteeinrichtung 87 die Kopplung 6 derart eingestellt, dass die von der Kopplung 6 vorgenommene Gleichspannungswandlung weiterhin eine Gleichspannung für das Bordteilnetz 5 liefert, die für die Versorgung des Bordteilnetzes 5 ausreichend ist oder die Versorgung zumindest unterstützt. Auf diese Weise ist es möglich, dass innerhalb des Bordteilnetzes 4, also dem Hochvoltbordteilnetz 8, keine für Personen gefährliche Spannung geführt werden muss und gleichzeitig das ungefährliche Niedervoltbordteilnetz 9 weiterhin betriebsfähig ist. Würde die Versorgung nicht erfolgen, so würde sich die Batterie 47 innerhalb kürzester Zeit entleeren und ein Betrieb des Kraftfahrzeugs 2 wäre unmöglich. Es ist insbesondere vorgesehen, über die Datennetze 51 und 50 die Steuergeräte 58 derart anzusteuern, dass lediglich die notwendigen elektrischen Verbraucher 86 mit elektrischer Energie aus dem Niedervoltbordteilnetz 9 versorgt werden, die ein sicherer Betrieb des Kraftfahrzeugs 2 benötgt. Auf diese Weise wird verhindert, dass das Kraftfahrzeug 2 im Gesamten im Fehlerfall stillgelegt wird und ein sicherer Betrieb des Kraftfahrzeugs 2 zumindest zeitweise aufrechterhalten werden kann. Gleichzeitig werden im Fehlerfall Gefahrenquellen für Personen durch das Hochvoltbordteilnetz 8 beseitigt.

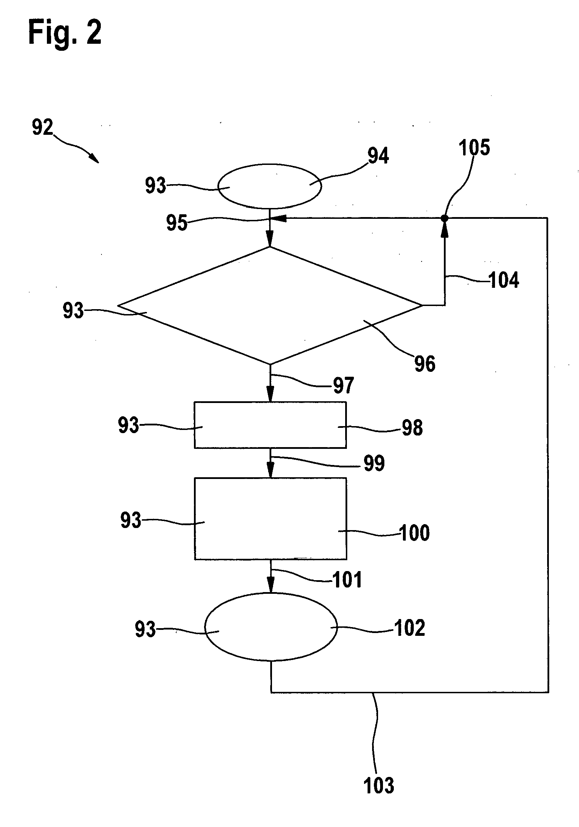

Die Figur 2 zeigt ein Flussdiagramm 92 des erfindungsgemäßen Verfahrens. Es ist vorgesehen, dass das Verfahren mehrere Verfahrensschritte 93 aufweist, die in zyklischer Weise wiederholend durchgeführt wurden. In einem ersten Verfahrensschritt 94 wird das Verfahren gestartet. Über einen Pfeil 95 geht das Verfahren über in einem zweiten Verfahrensschritt 96. Im zweiten Verfahrensschritt 96 wird geprüft, ob der Fehlerfall vorliegt. Liegt der Fehlerfall vor, so wird über einen Pfeil 97 ein dritter Verfahrensschritt 98 eingeleitet, in welchem sämtliche Funktionen, die eine Versorgung des Hochvoltbordteilnetzes 8 benötigen, abgeschaltet werden. Anschließend wird über einen Pfeil 99 zu einem vierten Verfahrensschritt 100 übergegangen, innerhalb dessen die von dem Generator 26 gelieferte Spannung bis auf ein für Personen ungefährlichen Wert von ungefähr 60 V abgesenkt wird. Zudem wird in der Kopplung 6 ein Betrieb eingestellt, welcher eine Wandlung der vom Generator 26 gelieferten Spannung in die für das Bordteilnetz 5 benötigte Spannung ermöglicht. Anschließend wird über einen Pfeil 101 zu einem abschließenden fünften Verfahrensschritt 102 übergegangen, in welchem nicht notwendige elektrische Verbraucher 86 innerhalb des Bordteilnetzes 5 abgeschaltet werden, um die Versorgung der notwendigen elektrischen Verbraucher 86 zu gewährleisten. Somit befindet sich das Bordnetz 1 und damit das Kraftfahrzeug 2 in einem Notfahrbetrieb, welcher im Fehlerfall einen sicheren Betrieb des Kraftfahrzeugs 2 und Sicherheit für beteiligte Personen gewährleistet. Anschließend wird über einen Pfeil 103 zurück in den Pfeil 95 übergegangen und der zyklische Ablauf des Verfahrens beginnt mit dem zweiten Verfahrensschritt 96 erneut. Für den Fall, dass im zweiten Verfahrensschritt 96 kein Fehlerfall festgestellt wird, wird direkt über den Pfeil 104, welcher an einem Knotenpunkt 105 in den Pfeil 103 übergeht, erneut gestartet.

Besonders vorteilhaft ist, dass die im Fehlerfall eingestellte Spannung im Hochvoltbordteilnetz 9 unkrititsch in Hinsicht auf eine Gefährdung von Personen durch eine hohe Spannung ist. Da die Batterie 47 weiterhin über die Kopplung 6 mit Spannung versorgt wird, kann das Fahrzeug 2 dauerhaft weiter betrieben werden. Die Gefahr eines Liegenbleibens des Kraftfahrzeugs 2 in kritischen Verkehrssituationen werden dadurch vermieden.

## Patentansprüche

1. Verfahren zum Betreiben eines Bordnetzes (1) eines Hybridfahrzeugs (3), wobei das Bordnetz (1) mindestens zwei Bordteilnetze (4,5) unterschiedlicher elektrischer Spannungen aufweist und eine einen elektrischen Energiefluss zulassende Kopplung (6) in Form eines Gleichspannungswandlers (7) zwischen den Bordteilnetzen (4,5) besteht, und wobei das eine Bordteilnetz (4) als Hochvoltbordteilnetz (8) an einen Generator (26) und das andere Bordteilnetz (5) als Niedervoltbordteilnetz (9) an mindestens einen elektrischen Verbraucher (86) angeschlossen wird, **dadurch gekennzeichnet, dass** bei einer beschädigten Leitungsisolation, einer geöffneten Isolationsabdeckung und/oder mindestens einer durchtrennten elektrischen Verbindung innerhalb des Hochvoltbordteilnetzes (8) ein Fehlerfall von mindestens einer Auswerteeinrichtung (87) detektiert und daraufhin die von dem Generator (26) gelieferte Spannung bis auf einen für Personen ungefährlichen Wert abgesenkt wird, wobei dennoch ein Energiefluss von dem Hochvoltbordteilnetz (8) in das Niedervoltbordteilnetz (9) durch den Gleichspannungswandler (7) erfolgt.

2. Verfahren nach Anspruch 1, **dadurch gekennzeichnet, dass** der Generator (26) das Hochvoltbordteilnetz (8) direkt mit elektrischer Spannung versorgt.

3. Verfahren nach einem der vorhergehenden Ansprüche, **dadurch gekennzeichnet, dass** mindestens eines der Bordteilnetze (4,5), insbesondere das Niedervoltbordteilnetz (5), elektrische Energie in mindestens einer ihm zugeordneten Batterie (36, 47) speichert.

4. Verfahren nach einem der vorhergehenden Ansprüche, **dadurch gekennzeichnet, dass** die vom Generator (26) gelieferte Spannung abgesenkt wird, wenn die Auswerteeinrichtung (87) eine Betriebsstörung aufweist.

5. Verfahren nach einem der vorhergehenden Ansprüche, **dadurch gekennzeichnet, dass** als Verbraucher (86) ein nur für einen sicheren Betrieb des Kraftfahrzeugs (2) notwendiger Verbraucher (86) verwendet wird.

6. Verfahren nach einem der vorhergehenden Ansprüche, **dadurch gekennzeichnet, dass** das Hochvoltbordteilnetz (8) im Normalbetrieb mit einer Spannung von ungefähr 300 Volt betrieben wird.

7. Verfahren nach einem der vorhergehenden Ansprüche, **dadurch gekennzeichnet, dass** das Niedervoltbordteilnetz (9) mit einer Spannung von ungefähr 14 Volt betrieben wird.

8. Verfahren nach einem der vorhergehenden Ansprüche, **dadurch gekennzeichnet, dass** der Generator (26) im Fehlerfall eine Spannung von ungefähr 60 Volt liefert.

9. Verfahren nach einem der vorhergehenden Ansprüche, **dadurch gekennzeichnet, dass** als Kraftfahrzeug (2) ein Hybridfahrzeug (3) verwendet wird.

## Claims

1. Method for operating an on-board power system (1) of a hybrid vehicle (3), wherein the on-board power system (1) has at least two on-board power sub-systems (4, 5) with different electrical voltages, and there is a connect (6) permitting a flow of electrical energy, in the form of a direct voltage transformer (7), between the on-board power sub-systems (4, 5), and wherein the one on-board power sub-system (4) is connected as a high voltage on-board power sub-system (8) to a generator (26), and the other on-board power sub-system (5) is connected as a low voltage on-board power sub-system (9) to at least one electrical load (86),
**characterized in that** in the case of damaged line insulation, of an opened insulation cover and/or of at least one disconnected electrical connection within the high voltage on-board sub-system (8) a fault is detected by at least one evaluation device (87) and subsequently the voltage which is supplied by the generator (26) is reduced as far as a value which is non-hazardous for persons, wherein nevertheless a flow of energy from the high voltage on-board power sub-system (8) into the low voltage on-board power sub-system (9) occurs through the direct voltage transformer (7).

2. Method according to Claim 1, **characterized in that** the generator (26) supplies the high voltage on-board power sub-system (8) directly with electrical voltage.

3. Method according to either of the preceding claims, **characterized in that** at least one of the on-board power sub-systems (4, 5), in particular the low voltage on-board power sub-system (5), stores electrical energy in at least one battery (36, 47) assigned thereto.

4. Method according to one of the preceding claims, **characterized in that** the voltage which is supplied by the generator (26) is lowered if the evaluation device (87) has an operational fault.

5. Method according to one of the preceding claims, **characterized in that** a load (86) which is necessary only for safe operation of the motor vehicle (2) is used as the load (86).

6. Method according to one of the preceding claims, **characterized in that** the high voltage on-board power sub-system (8) is operated in the normal operating mode with a voltage of approximately 300 volts.

7. Method according to one of the preceding claims, **characterized in that** the low voltage on-board power sub-system (9) is operated with a voltage of approximately 14 volts.

8. Method according to one of the preceding claims, **characterized in that** in the event of a fault the generator (26) supplies a voltage of approximately 60 volts.

9. Method according to one of the preceding claims, **characterized in that** a hybrid vehicle (3) is used as the motor vehicle (2).

## Revendications

1. Procédé d'utilisation d'un réseau de bord (1) d'un véhicule hybride (3), le réseau de bord (1) comportant au moins deux réseaux partiels de bord (4, 5) avec différentes tensions électriques et un couplage (6) laissant passer un flux d'énergie électrique existant sous la forme d'un convertisseur de tension continue (7) disposé entre les réseaux partiels de bord (4, 5) et le réseau partiel de bord (4) prenant la forme d'un réseau partiel de bord de haute tension (8) raccordé à un générateur (26) et l'autre réseau partiel de bord (5) prenant la forme d'un réseau partiel de bord de basse tension (9) raccordé à au moins un récepteur électrique (86), **caractérisé en ce qu'**en cas d'isolation de câble endommagée, de cache isolant ouvert et/ou d'au moins une liaison électrique coupée à l'intérieur du réseau partiel de bord de haute tension (8), une anomalie est détectée par au moins un dispositif d'analyse (87) et qu'à ce moment-là, la tension amenée par le générateur (26) peut être diminuée jusqu'à une valeur non dangereuse pour les personnes, un flux d'énergie passant du réseau partiel de bord de haute tension (8) dans le réseau partiel de bord de basse tension (9) se produisant toutefois au travers du convertisseur de tension continue (7).

2. Procédé selon la revendication 1, **caractérisé en ce que** le générateur (26) alimente directement le réseau partiel de bord de haute tension (8) en tension électrique.

3. Procédé selon l'une quelconque des revendications précédentes, **caractérisé en ce qu'**au moins un des réseaux partiels de bord (4, 5), notamment le réseau partiel de bord de basse tension (5), accumule de l'énergie électrique dans au moins une batterie (36, 47) lui étant associée.

4. Procédé selon l'une quelconque des revendications précédentes, **caractérisé en ce que** la tension amenée par le générateur (26) est diminuée lorsque le dispositif d'analyse (87) présente une panne de fonctionnement.

5. Procédé selon l'une quelconque des revendications précédentes, **caractérisé en ce que** le récepteur (86) utilisé est un récepteur (86) nécessaire uniquement pour un fonctionnement sûr du véhicule automobile (2).

6. Procédé selon l'une quelconque des revendications précédentes, **caractérisé en ce que** le réseau partiel de bord de haute tension (8) est entraîné en fonctionnement à une tension d'approximativement 300 Volt.

7. Procédé selon l'une quelconque des revendications précédentes, **caractérisé en ce que** le réseau partiel de bord de basse tension (9) est entraîné à une tension d'approximativement 14 Volt.

8. Procédé selon l'une quelconque des revendications précédentes, **caractérisé en ce que** le générateur (26) amène en cas d'anomalie une tension d'approximativement 60 Volt.

9. Procédé selon l'une quelconque des revendications précédentes, caractérisé en ce le véhicule automobile (2) utilisé est un véhicule hybride (3).
